# EUROPEAN PATENT APPLICATION

(11) **EP 4 525 100 A1**
(43) Date of publication of application: **19.03.2025**
(21) Application number: 23197056.7
(22) Date of filing: 13.09.2023
(51) Int. Cl.: H01M 8/00, H01M 8/2475

(54) **PRESSURE-RESISTANT FUEL CELL**

(71) Applicant: Airbus Operations GmbH, 21129 Hamburg (DE)
(72) Inventor: Nehter, Pedro, 21129 Hamburg (DE)

(57) **Abstract**

The present invention relates to a carrier structure for electrodes of a fuel cell.

In order to provide for a more stable fuel cell suitable for aircrafts a carrier structure (10) for electrodes of a fuel cell (12) is provided. The structure comprises a duct wall (14) and a tubular ducting volume (16). The duct wall forms the tubular ducting volume and comprises an outer surface (18) facing a surrounding (20) and an inner surface (22) facing the tubular ducting volume. The tubular ducting volume is configured to conduct a first supply flow (24) comprising an oxidant. The duct wall is configured to provide a second supply flow (26) within the duct wall, the second supply flow comprising a reductant. The duct wall separates the first supply flow in the tubular ducting volume from the second supply flow within the duct wall and the surrounding of the carrier structure. A primary power coating layer (28) is applied on the inner surface of the duct wall for being arranged between the first supply flow and the second supply flow. The primary power coating layer is configured for generating electrical energy from the first supply flow and the second supply flow. The duct wall is configured to withstand pressure loads (30) resulting from a pressure difference between the tubular ducting volume and the surrounding. The pressure in the tubular ducting volume is at least twice as large as the pressure in the surrounding.

## Description

### FIELD OF THE INVENTION

The present invention relates to a pressure stable electrode, more specifically the invention relates to a carrier structure for electrodes of a fuel cell, a fuel cell setup, a fuel cell arrangement, an energy supply system, an aircraft and a method for providing a carrier structure.

### BACKGROUND OF THE INVENTION

Fuel cells that convert chemical to electrical energy may be deployed to power a wide range of vehicle systems. However, certain vehicle systems, like aircrafts, have challenges in deploying fuel cells in terms of their stability to withstand possible physical conditions that may occur during operation of an aircraft and in terms of leakage of the fuel cell. The fuel cell design for handling of these requirements may result in too heavy fuel cell arrangements that may render the use of fuel cells in aircrafts inefficient.

### SUMMARY OF THE INVENTION

There may thus be a need for a more stable fuel cell suitable for aircrafts.

The object of the present invention is solved by the subject-matter of the independent claims; further embodiments are incorporated in the dependent claims. It should be noted that the following described aspects of the invention apply also for the carrier structure for electrodes of the fuel cell, for the fuel cell setup, for the fuel cell arrangement, for the energy supply system, for the aircraft and for the method for providing a carrier structure.

According to the present invention, a carrier structure for electrodes of a fuel cell is provided. The structure comprising a duct wall and a tubular ducting volume. The duct wall forms the tubular ducting volume and comprises an outer surface facing a surrounding and an inner surface facing the tubular ducting volume. The tubular ducting volume is configured to conduct a first supply flow comprising an oxidant. The duct wall is configured to provide a second supply flow within the duct wall, the second supply flow comprising a reductant. The duct wall separates the first supply flow in the tubular ducting volume from the second supply flow within the duct wall and the surrounding of the carrier structure. A primary power coating layer is applied on the inner surface of the duct wall for being arranged between the first supply flow and the second supply flow. The primary power coating layer is configured for generating electrical energy from the first supply flow and the second supply flow. The duct wall is configured to withstand pressure loads resulting from a pressure difference between the tubular ducting volume and the surrounding. The pressure in the tubular ducting volume is at least twice as large as the pressure in the surrounding.

As an advantage, a lighter and more stable fuel cell is yielded.

As an advantage, high pressure differences can be handled between the inner and outer gas compartment of the tube.

As an advantage, a tremendous weight reduction for the surrounding compartment of the fuel cell stack is achieved because the pressure difference between the reactant air and the environmental atmosphere of the aircraft is fully captured by the cells itself.

As a further advantage, a fuel cell with a higher gravimetric power density is provided.

According to an example, the duct wall is based on an open-cellular structure. The open-cellular structure is configured to enhance interconnection within the duct wall to provide for its mechanical stability. The outer surface and the inner surface of the duct wall are formed from more dense cell regions of the open-cellular structure that are configured to separate the second supply flow from the first supply flow and the surrounding. The open-cellular structure comprises less dense cell regions within the duct wall to conduct the second supply flow.

According to an example, the open-cellular structure comprises a metal foam.

According to an example, a secondary power coating layer is applied on the outer surface of the duct wall for being arranged between the second supply flow and the surrounding providing an auxiliary source of oxidant to react with the reductant of the second supply flow. The secondary power coating layer is configured for providing electrical energy from the second supply flow and the auxiliary source of oxidant.

According to the present invention, also a fuel cell setup is provided. The fuel cell setup comprises at least one carrier structure according to one of the previous examples and electric terminals. The electric terminals comprise inner electric terminals that are in electric contact with the primary power coating layer. The electric terminals are configured to establish an electric power circuit by operating the carrier structure with an oxidant flow and a reductant flow.

According to the present invention, also a fuel cell arrangement is provided. The fuel cell arrangement comprises a housing and at least one fuel cell setup according to the previous examples. The least one fuel cell setup is encased by the housing. A gap between the at least one fuel cell setup and the housing forms a fluid receiving compartment for a fluid. The fluid prevents a contact of the at least one fuel cell setup with a surrounding atmosphere of the housing.

As an advantage, a more efficient thermal insulation for a fuel cell setup is provided.

As an advantage, a more secure and lighter fuel cell arrangement is yielded.

According to the present invention, also an energy supply system is provided. The energy supply system comprises at least one fuel cell arrangement according to the previous examples and a fuel reservoir. The fuel reservoir is connected to the at least one fuel cell arrangement to supply the second supply flow and the at least one fuel cell arrangement is configured to provide electric energy to power consuming loads.

As an advantage, a more secure and reliable energy supply system is yielded.

According to the present invention, also an aircraft is provided. The aircraft comprises at least one energy supply system according to the previous example and at least one power consuming load. The least one power consuming load comprises at least one of the group of: a propulsion system, electric avionic equipment and onboard electric devices for a cabin area. The least one power consuming load is powered by the at least one energy supply system.

As an advantage, a more secure and reliable aircraft is yielded.

As an advantage, leakages of fuel into the surrounding atmosphere of the fuel cell can be more effectively detected.

As an advantage, a lighter aircraft is yielded.

According to the present invention, also a method is provided. The method comprises the following steps:
- Providing a duct wall,
- Providing a tubular ducting volume, and
- Forming the tubular ducting volume from the duct wall, wherein the duct wall comprises an outer surface facing a surrounding and an inner surface facing the tubular ducting volume,
- Configuring the tubular ducting volume to conduct a first supply flow comprising an oxidant,
- Configuring the duct wall to provide a second supply flow within the duct wall, the second supply flow comprising a reductant,
   wherein the duct wall separates the first supply flow in the tubular ducting volume from the second supply flow within the duct wall and the surrounding of the carrier structure, and
- Applying a primary power coating layer on the inner surface of the duct wall for being arranged between the first supply flow and the second supply flow. The primary power coating layer is configured for generating electrical energy from the first supply flow and the second supply flow. The duct wall is configured to withstand pressure loads resulting from a pressure difference between the tubular ducting volume and the surrounding. The pressure in the tubular ducting volume is at least twice as large as the pressure in the surrounding.

According to an aspect, the fuel cell comprises a metal supported tubular cell with a metal foam as mechanical backbone, or support, which is also functioning as a fuel gas channel. The mechanical backbone allows high pressure differences between the inside and outside of the tube as well as a higher shock resistivity.

According to an aspect, a fuel cell deploys an electrode wall that protects an inner oxidant fluid stream and an inner reductant fluid stream from surroundings of the fuel cell. The wall is tube-shaped and provides the fuel fluid supply within the wall structure itself. Further the electrode wall provides a separation of the oxidant fluid stream and the reductant fluid stream. The electrode wall also enhances the mechanical stability of the fuel cell to withstand a higher mass flow of a pressurized oxidant fluid stream and a pressurized reductant fluid stream.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows a general scheme of an example of a carrier structure.
Fig. 2 schematically shows a general scheme of an example of a fuel cell setup and a fuel cell arrangement.
Fig. 3 schematically shows a general scheme of an example of an energy supply system.
Fig. 4 schematically shows an example of an aircraft comprising at least one energy supply system.
Fig. 5 shows basic steps of an example of a method for providing a carrier structure for electrodes of a fuel cell.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

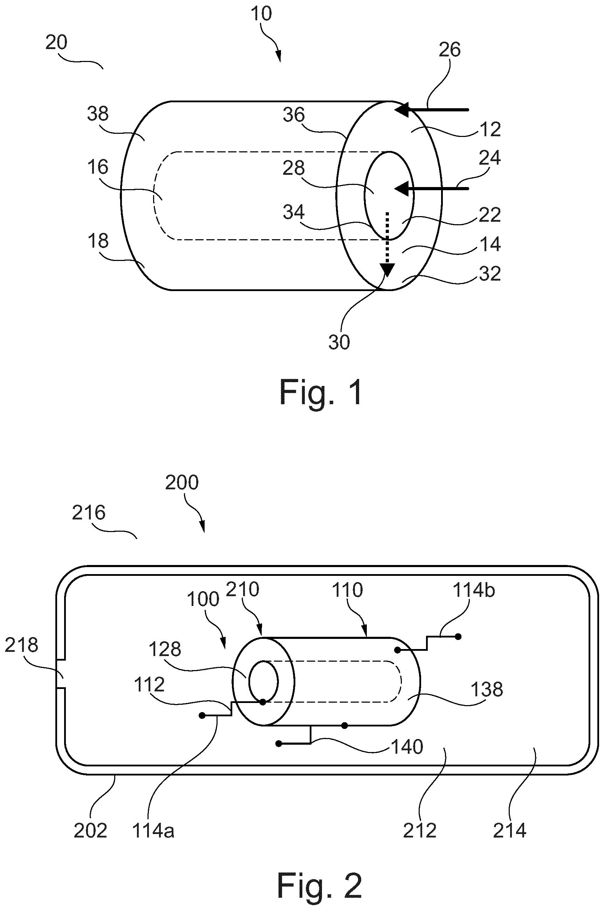

Fig. 1 schematically shows a general scheme of an example of a carrier structure. The carrier structure 10 for electrodes 12 of a fuel cell comprises a duct wall 14 and a tubular ducting volume 16. The duct wall 14 forms the tubular ducting volume 16 and comprises an outer surface 18 facing a surrounding 20 and an inner surface 22 facing the tubular ducting volume 16. The tubular ducting volume 16 is configured to conduct a first supply flow 24 comprising an oxidant. The duct wall 14 is configured to provide a second supply flow 26 within the duct wall 14, the second supply flow 26 comprising a reductant. The duct wall 14 separates the first supply flow 24 in the tubular ducting volume 16 from the second supply flow 26 within the duct wall 14 and the surrounding 20 of the carrier structure 10. A primary power coating layer 28 is applied on the inner surface 22 of the duct wall 14 for being arranged between the first supply flow 24 and the second supply flow 26. The primary power coating layer 28 is configured for generating electrical energy from the first supply flow 24 and the second supply flow 26. The duct wall 14 is configured to withstand pressure loads 30 resulting from a pressure difference between the tubular ducting volume 16 and the surrounding 20. The pressure in the tubular ducting volume 16 is at least twice as large as the pressure in the surrounding 20.

The carrier structure can also be referred to as support, hull, skeleton, backbone, framework, base, tubular framework, scaffold, matrix, column, spine, base, supporting device, supporting framework, support body, supporting membrane, membrane body, membrane device, framework device, membrane support, base framework, base membrane, base support, base cylinder, base reactor, base structure, base unit.

The term "primary" can also be referred to as first and vice versa.

The term "secondary" can also be referred to as second and vice versa.

In an example, the carrier structure 10 comprises metal, not shown in Fig. 1.

In an example, the carrier structure 10 is made by additive manufacturing, not shown in Fig. 1.

In an example, the carrier structure 10 is made by additive manufacturing from metal powder.

The term "electrodes" relates to units that can extract electrons from atoms, donate electrons to atoms or transfer electrons between atoms.

The term "fuel cell" relates to a unit that converts chemical energy into electric energy using a reducing and oxidizing substance.

In an example, the fuel cell is provided as solid oxide fuel cell, SOFC. The solid oxide fuel cell provides an oxide ion conducting solid state electrolyte between an anode layer site and a cathode layer site. The anode layer site extracts electrons from a reducing substance, i.e., hydrogen, that are transferred via an electric circuit to the cathode layer site. At the cathode layer site these electrons reduce an oxidant, i.e., oxygen, to oxide ions. The oxide ions are transferred via the oxide ion conducting solid state electrolyte to the anode layer site, where they match up with the converted reducing substance, i.e., protons, to form water and close the electric circuit. To provide for the mobility of the oxide ions in the oxide ion conducting solid state electrolyte, the SOFC needs to be operated at elevated temperatures, i.e., at over 600 °C.

In an example, the fuel cell is configured to convert the chemical energy of hydrogen to electricity, not shown in Fig. 1.

In an example, the fuel cell is configured to convert the chemical energy of molecular hydrogen to electricity, not shown in Fig. 1.

In an example, the fuel cell is configured to convert the chemical energy of molecular ammonia to electricity, not shown in Fig. 1.

In an example, the fuel cell is configured to convert the chemical energy of a hydrocarbon to electricity, not shown in Fig. 1.

In an example, the fuel cell is configured to convert the chemical energy of methane to electricity, not shown in Fig. 1.

In an example, the fuel cell is configured to convert the chemical energy of methanol to electricity, not shown in Fig. 1.

The term "duct wall" relates to a physical barrier for molecules of a fuel for a fuel cell, but which is permeable for the reaction products of the energy converting reaction of the fuel cell, for example for oxide ions, electrons, or protons, to enable the reaction in the fuel cell. The duct wall 14 prevents the permeation of the molecules from an inner lumen enclosed by the duct wall 14 to the outside, the surrounding 20 of Fig. 1.

In an example, the duct wall 14 is a membrane, not shown in Fig. 1.

In an example, the duct wall 14 is a metallic membrane.

In an example, the duct wall 14 is a ceramic membrane.

In an example, the duct wall 14 is a tubular membrane duct.

In an example, the duct wall 14 is a membrane duct.

In an example, the duct wall 14 is configured to allow for diffusion of reaction products between the first supply flow 24 and the second supply flow 26, not shown in Fig. 1.

The term "tubular ducting volume" relates to the inner lumen formed by a tube or a pipe that can conduct a mass flow of, i.e., a fluid, and predetermine the direction of the mass flow.

The term "outer surface" relates to the face that encloses a tube or a pipe and is in contact to the environment of the tube or pipe, the surrounding 20 of Fig. 1, contrary to the inner lumen of the tube or pipe that is not in contact to the environment.

In an example, the outer surface 18 of the tube is coated with an electrochemically inactive gas tight layer, not shown in Fig. 1.

In an example, the outer surface 18 provides for thermal insulation, not shown in Fig. 1.

In an example, the outer surface 18 provides for electric insulation, not shown in Fig. 1.

The term "surrounding" relates to a space in a vehicle, such as an aircraft, or can also relate to a space enclosed by a housing or a chamber. The surrounding 20 can also be the external environment outside the vehicle.

The term "inner surface" relates to the face of a tube or pipe that is in contact to the inner lumen of the tube or pipe that is not in contact to the environment of the tube or pipe.

The term "supply flow" relates to a mass flow of molecules. The supply flow can be provided by a tank and compressors, not shown in Fig. 1.

The first supply flow 24 can also be referred to as supply flow or first flow.

The second supply flow can also be referred to as supply flow or second flow.

In an example, the supply flow is provided to the carrier structure 10 by supply lines and the supply lines are attached to the carrier structure 10 by dedicated adapters, not shown in Fig. 1.

In an example, the supply flow comprises pressurized fluid.

The term "oxidant" relates to a substance that can accept electrons.

In an example, the oxidant can be oxygen and/or hydrogen peroxide and/or nitrogen oxides.

The term "within the duct wall" relates to a property of the duct wall 14 in providing a radial cross section that is able to conduct a mass flow, as shown in Fig. 1.

In an example, there are channels, pores, holes or cavities within the duct wall 14 that form an empty volume space to conduct a fluid.

The term "reductant" relates to a substance that donates electrons.

The reductant can also be referred to as fuel, reducing agent or reducer.

In an example, the fuel comprises hydrogen.

In an example, the fuel comprises molecular hydrogen.

In an example, the fuel comprises molecular ammonia.

In an example, the fuel comprises a hydrocarbon.

In an example, the fuel comprises methane.

In an example, the fuel comprises methanol.

The term "separates" relates to the function of the duct wall 14 in preventing the direct contact of the first supply flow 24 and the second supply flow 26, such that, e.g., the reductant and the oxidant do not mix and react in Fig. 1.

The term "primary power coating layer" relates to an entity that enables the power converting function of the fuel cell. The primary power coating layer 28 comprises a cathode layer an electrolyte layer and an anode layer. The primary power coating layer 28 is electrochemically active in Fig. 1.

The primary power coating layer 28 can also be referred to as primary coating layer, primary layer, first power coating layer, or first layer.

In an example, the cathode layer is attached to the electrolyte layer and the electrolyte layer is attached to the anode layer in a sandwich structure of the primary power coating layer 28, not shown in Fig. 1.

In an example, the primary power coating layer 28 can be applied to the inner surface 22, such that the inner surface 22 has different structural orientations towards the sandwiched structure of the primary power coating layer 28, not shown in Fig. 1.

In an example, the inner surface 22 is provided in the cathode layer, not shown in Fig. 1.

In a further example, the inner surface 22 is provided between the cathode layer and the electrolyte layer, not shown in Fig. 1.

In a further example, the inner surface 22 is provided in the electrolyte layer, not shown in Fig. 1.

In a further example, the inner surface 22 is provided between the electrolyte layer and the anode, not shown in Fig. 1.

In a further example, the inner surface 22 is provided at the anode layer, not shown in Fig. 1.

In an example, the duct wall 14 comprises a structural contact area enlargement to enhance the contact surface to the primary power coating layer 28, not shown in Fig. 1.

In an example, the duct wall 14 comprises channels to allow permeation of the reaction products in the first supply flow 24 and the second supply flow 26 through the primary power coating layer 28, not shown in Fig. 1.

In an example, the duct wall 14 is made from the primary power coating layer 28, not shown in Fig. 1.

In an example, the duct wall 14 comprises the anode layer, not shown in Fig. 1.

In an example, to enhance the number of conversions of molecules in the fuel cell and the production of electric energy of the fuel cell, the pressure of the first and second supply flow 26 is enhanced.

In an example, the pressure of the first and second supply flow 26 is enhanced by a compressor, not shown in Fig. 1.

In an example the pressure in the tubular ducting volume 16 can be at around 4 bar and the pressure in the surrounding 20 can be at around 0.3 bar.

In an example the pressure in the tubular ducting volume 16 can be at around 4 bar and the pressure in the surrounding 20 can be at around 1 bar.

In an example, the pressure difference is in a range of about 3.7 bar.

In an example, not show in Fig. 1, the pressure difference between the tubular ducting volume 16 and the surrounding 20 results from the pressure of the first supply flow 24 being larger than the pressure of the second supply flow 26 being larger than the pressure in the surrounding 20.

In an example, the pressure of the first supply flow 24 is at around 4 bar, the pressure of the second supply flow 26 is at around 2 bar and the pressure in the surrounding 20 is at around 0.3 bar.

In an example, the pressure of the first supply flow 24 is at around 4 bar, the pressure of the second supply flow 26 is at around 2 bar and the pressure in the surrounding 20 is at around 1 bar.

In an example, the environmental atmosphere of the aircraft is used at its low pressure level within the surrounding 20. This way heat losses can be reduced and thermal insulation works more efficiently as the density and heat conductivity of the surrounding 20 atmosphere is reduced compared to pressurized conditions, not shown in Fig. 1.

In an example, the structure of the carrier structure 10 is adjusted to withstand the pressure gradient between first flow supply, second flow supply and the surrounding 20.

As an advantage, heat losses of a fuel cell can be reduced and thermal insulation works more efficiently.

In an example of Fig. 1, the duct wall 14 is based on an open-cellular structure 32. The open-cellular structure 32 is configured to enhance interconnection within the duct wall 14 to provide for its mechanical stability. The outer surface 18 and the inner surface 22 of the duct wall 14 are formed from more dense cell regions of the open-cellular structure 32 that are configured to separate the second supply flow 26 from the first supply flow 24 and the surrounding 20. The open-cellular structure 32 comprises less dense cell regions within the duct wall 14 to conduct the second supply flow 26.

The term "more dense cell regions" relates to regions of the open cellular structure that are less permeable or impenetrable for molecules, than the "less dense cell regions".

In an example, the "more dense cell regions" comprise more matter per volume than the "less dense cell regions".

In an example, the primary power coating layer 28 covers at least a part of the inner surface 22 formed by the dense cell region of the open-cellular structure 32.

In an example, the duct wall 14 is based on a porous structure, not shown in Fig. 1. The pore walls enhance the mechanical stability of the duct wall 14 through their interconnections. The outer surface 18 and the inner surface 22 of the duct wall 14 are formed from sealed pore regions of the porous structure that are configured to separate the second supply flow 26 from the first supply flow 24 and the surrounding 20. The porous structure comprises open pore regions within the duct wall 14 to conduct the second supply flow 26.

In an example, the open-cellular structure 32 comprises a honeycomb structure, not shown in Fig. 1, connecting the inner surface 22 to the outer surface 18 of the wall. The honeycomb structure is configured to conduct the second supply flow 26 along the duct wall 14.

In an example not shown in Fig. 1, the open-cellular structure 32 comprises a metal foam.

In an example, at least a part of the metal foam is coated with an anode layer.

In an example, at least a part of the metal foam is coated with the primary power coating layer 28.

In an example, the metal foam separates the reactant air with a high pressure, 1-10 bar, at the inside of the tube from the environmental surrounding air at the outside of the tube, which has a very low pressure at high flight altitudes.

In an example, the fuel, i.e., the first supply flow 24, is fed to the porous metal foam, the reactant air, i.e., the second supply flow 26, to the tubular ducting volume 16. The outer surface 18 of the metal foam is covered with a gas-tight and electrochemically inactive layer.

As an advantage, by the metal foam the fuel cell is capable of handling higher mechanical and shock loads because of its more elastic properties compared to ceramic support structures.

In an example of Fig. 1, the duct wall 14 is formed from a first tubular wall 34 and a second tubular wall 36 in a double-walled manner. The first tubular wall 34 encloses the tubular ducting volume 16. The first tubular wall 34 is coaxially surrounded by the second tubular wall 36 providing a flow space between the first tubular wall 34 and the second tubular wall 36. The first tubular wall 34 is held spaced apart from the second tubular wall 36 by a plurality of spacers allowing the second supply flow 26 within the flow space. At least the first tubular wall 34 allows a flow of the reductant from the flow space towards the inner surface 22.

In an example, the duct wall 14 is a mantle structure, as shown in Fig. 1.

In an example, the first tubular wall 34 is configured to provide an exchange of reaction products with the flow space between the two walls.

In an example, the second supply flow 26 flows in-between the first tubular wall 34 and a second tubular wall 36.

In an example, the first tubular wall 34 and the second tubular wall 36 form an annular interspace for receiving the second supply flow 26, as shown in Fig. 1.

In an example, at least a part of the spacers is covered with the primary power coating layer 28.

In an example, at least a part of the spacers is covered with an anode layer.

In an example not shown in Fig. 1, the primary power coating layer 28 covers at least a part of the inner surface 22 formed by the first tubular wall 34.

In an example of Fig. 1, a secondary power coating layer 38 is applied on the outer surface 18 of the duct wall 14 for being arranged between the second supply flow 26 and the surrounding 20 providing an auxiliary source of oxidant to react with the reductant of the second supply flow 26. The secondary power coating layer 38 is configured for providing electrical energy from the second supply flow 26 and the auxiliary source of oxidant.

The term "secondary power coating layer" relates to an entity that enables the power converting function of the fuel cell. The secondary power coating layer 38 comprises a cathode layer an electrolyte layer and an anode layer, not shown in Fig. 1.

The secondary power coating layer 38 can also be referred to as secondary coating layer, secondary layer, second power coating layer, or second layer.

In an example, the cathode layer is attached to the electrolyte layer and the electrolyte layer is attached to the anode layer in a sandwich structure.

In an example, the secondary power coating layer 38 can be applied to the outer surface 18, such that the outer surface 18 has different structural orientations towards the sandwiched structure of the primary power coating layer 28, not shown in Fig. 1.

In an example, the outer surface 18 is provided in the cathode layer, not shown in Fig. 1.

In a further example, the outer surface 18 is provided between the cathode layer and the electrolyte layer, not shown in Fig. 1.

In a further example, the outer surface 18 is provided in the electrolyte layer, not shown in Fig. 1.

In a further example, the outer surface 18 is provided between the electrolyte layer and the anode, not shown in Fig. 1.

In a further example, the outer surface 18 is provided at the anode layer, not shown in Fig. 1.

In an example, the cathode layer is applied facing away from the anode layer of the primary power coating layer 28, not shown in Fig. 1.

In an example, the cathode layer of the secondary power coating layer 38 faces to the surrounding 20 of the carrier structure 10, not shown in Fig. 1.

In an example, the secondary power coating layer 38 reacts with the air of the atmosphere in the surrounding 20 of the carrier structure 10 that acts as the auxiliary source of oxidant.

As an advantage, a fuel cell with an auxiliary power source can be provided.

Fig. 2 schematically shows a general scheme of an example of a fuel cell setup 100 and a fuel cell arrangement 200. The fuel cell setup 100 comprises at least one carrier structure 110 according to one of the previous examples and electric terminals 112. The electric terminals 112 comprise inner electric terminals 114a, 114b that are in electric contact with a primary power coating layer 128. The electric terminals 112 are configured to establish an electric power circuit by operating the carrier structure 110 with an oxidant flow and a reductant flow.

In an example, the inner electric terminals 114a, 114b are in contact to an anode layer and a cathode layer of the primary power coating layer 128, not shown in Fig. 2. The carrier structure 110 is configured to establish an electric power circuit via the inner terminals by operating the at least one carrier structure 110 with an oxidant flow and a reductant flow.

In an example of Fig. 2, the carrier structure 110 comprises a secondary power coating layer 138. The electric terminals comprise at least one outer electric terminal 140 that is in electric contact with the secondary power coating layer 138. The inner electric terminals 114a, 114b are configured to establish a first electric power circuit and the at least one outer electric terminal 140 is configured to establish a second electric power circuit.

The oxidant flow can also be referred to as first supply flow 24 comprising an oxidant.

The reductant flow can also be referred to as second supply flow 26 comprising a reductant.

In an example, the outer surface 18 of the tube is coated with an electrochemically active layer, which can be used as power boost during take-off conditions of the aircraft when more power is needed. This could be an add on functionality. Additional terminals, like the at least one outer electric terminal 140, for the outer cathode of the secondary power coating layer 138 would have to be implemented to either utilize the power during take-off conditions as well as applying a small short-cut current at cruise conditions.

As an advantage, a fuel cell with an auxiliary electric power circuit can be provided.

In an example, not shown in Fig. 2, the at least one outer electric terminal 140 is further configured for short-circuiting at the secondary power coating layer 138 to form at least one short circuit unit. The at least one short circuit unit is configured for a depletion of an auxiliary source of oxidant of a surrounding 20, not shown in Fig. 2.

In an example, the at least one outer electric terminal 140 is further configured to connect to the anode layer of the secondary power coating layer 138 to form at least one short circuit unit in order to close an electric circuit between the anode layer and the cathode layer of the second tubular membrane wall, not shown in Fig. 2. The at least one short circuit unit is configured at the outer surface 18 facing a surrounding 20 for depletion of oxidant from the surroundings 20, not shown in Fig. 2.

In an example, oxygen molecules are reduced at the outer surface 18 to oxide ions that are absorbed by the secondary power coating layer 138, not shown in Fig. 2.

In an example, the outer surface 18 of the tube is coated with an electrochemically active layer, which could be used to create an inert-gas atmosphere around the tubular cells during cruise conditions of an aircraft, not shown in Fig. 2. A small short-cut current is applied between the negative potential of the anode, i.e., anode layer, at the metal support and the outer cathode. The required electrical short-cut connection between these two electrodes can be implemented within the outer anode/electrolyte/cathode layer. The closed outer gas compartment of the cell is thus gradually depleted from oxygen to create an inert-gas atmosphere.

As an advantage, a more secure fuel cell is yielded.

Fig. 2 also schematically shows a general scheme of an example of a fuel cell arrangement 200. The fuel cell arrangement 200 comprises a housing 202 and at least one fuel cell setup 210 according to one of the previous examples. The least one fuel cell setup 210 is encased by the housing 202. A gap 212 between the at least one fuel cell setup 210 and the housing 202 forms a fluid receiving compartment for a fluid 214. The fluid prevents a contact of the at least one fuel cell setup 210 with a surrounding atmosphere 216 of the housing 202.

The housing can also be referred to as chamber, envelope, case, box or compartment.

In an example, due to the rigid design of the carrier structure 110 of the fuel cell setup 210, a lighter housing can be chosen.

In an example, the housing 202 comprises a thermal insulation, not shown in Fig. 2.

In an example, a reduced pressure of the fluid provides for thermal insulation of the fuel cell setup 210 in the housing 202.

In an example, the surrounding compartment, i.e., the housing 202 of the fuel cell arrangement 200 faces a minimum of pressure difference between the inside of the housing 202 and the environmental conditions. The mechanical housing, i.e., housing 202 can be constructed with thin walls and consequently light-weight designs. The low pressure level within the surrounding compartment, i.e., housing 202, furthermore reduces heat losses because the thermal insulation applied to the inner surface of the compartment works more efficiently as the gas density and heat conductivity within the insulation material is reduced compared to pressurized conditions.

In an example, the housing 202 comprises supply ports for the first and second supply flow 24, 26 to the at least one fuel cell setup 210, not shown in Fig. 2.

In an example of Fig. 2, the housing 202 further provides an access 218 of the fluid receiving compartment 214 to the surrounding atmosphere 216 for leveling a pressure of a protective fluid. The protective fluid comprises the surrounding atmosphere 216. The at least one fuel cell setup 210 converts the surrounding atmosphere 216 to the protective fluid when operating. The at least one fuel cell setup 210 generates an auxiliary electric power from the surrounding atmosphere 216 in the protective fluid.

In an example, the fuel cell setup 210 comprises the secondary power coating layer 38 or the short circuit unit at the outer surface 18, not shown in Fig. 2. The fuel cell setup 210 is encased in the housing 202 that comprises the fluid. Due to levelling of the pressure of the fluid with the surrounding atmosphere 216 of the housing 202, the fluid contains oxidant, like, i.e., oxygen. When the fuel cell setup 210 is operated in the housing 202 it will gradually convert the oxidant, i.e., oxidant in the fluid of the housing 202, such that all oxidant is removed from the fluid in the housing 202. This way an inert atmosphere is created in the housing 202. The levelling of the pressure might occur in a situation where the fuel cell arrangement 200 is aboard an aircraft, not shown in Fig. 2, and the aircraft is on ground after being on a flight mission. At flight mission, pressure in the housing 202 is at around 0.3 bar. At an aircraft on ground condition, pressure in the housing 202 is at around 1 bar. Moreover, this provides, in the case of the secondary power coating at the outer surface 18, auxiliary electric power that can be used in a case where additional power is required, e.g., when the aircraft takes off.

In an example, at aircraft cruise conditions, not shown in Fig. 2, the surrounding atmosphere 216 of the fuel cell set ups can be depleted from oxygen to create an inter-gas atmosphere which provides additional safety in case of fuel, like hydrogen, leakages into the stack compartment.

In an example, the secondary power coating layer 138 has an electrochemically active outer cathode, where the fuel is fed to the porous metal foam, i.e., the duct wall 14, the reactant air to the tubular ducting volume 16, not shown in Fig. 2, and the housing 202 with air at environmental conditions. The housing 202 here is designed as a closed housing 202 with a small connection to the environment atmosphere to enable a levelling of the outer and inner pressure of the mechanical housing 202. The outer active cathode is suited with some electrical short circuit connections, not shown in Fig. 2, between the outer cathode and the metal foam which has the anodic potential. The short circuit connection is designed in the way that only a small, short circuit current will gradually deplete the air inside the housing 202 from oxygen to create an inert gas atmosphere around the fuel cell setup 210. Additional safety in case of fuel, hydrogen, leakages into the stack compartment, i.e., housing 202, is realized by the inter-gas atmosphere. Consequently, a small portion of hydrogen is consumed during the start-up of the cells. Once the oxygen is fully depleted from the stack compartment, the short circuit current and hydrogen consumption via the outer active cell area, i.e., at the secondary power coating layer 138, would be interrupted naturally.

In an example, an electrochemically active outer cathode, i.e., the secondary power coating layer 138 is at the fuel cell setup 210. The fuel is fed to the porous metal foam, i.e., the duct wall 14, the first reactant air to the tubular ducting volume 16 and the stack compartment, i.e., housing 202 or compartment, with either the second reactant air at environmental conditions, the duct wall 14 and the tubular ducting volume 16 are not shown in detail in Fig. 2. The compartment is here optionally designed as an open and closed housing 202 to the environment atmosphere. The outer active cathode is used for two purposes. One purpose is to provide additional power at take-off operation of the aircraft when the atmospheric pressure is around 1 bar and thus provides a sufficient oxygen partial pressure for fuel cell operation. The electrical power from the outer cathode is supplied between an inner terminal and the at least one outer terminal. The stack compartment is hereby operated in an exchange of the reactant air with the environment to supply a sufficient amount of oxygen to the stack compartment. The other purpose considers that at cruise conditions, less power is required. The power can sufficiently be supplied by the inner active cathode between the inner terminals. A small and controlled electrical short circuit current is applied between the inner terminal and the at least one outer terminal to gradually deplete the oxygen from the stack compartment and finally create an inert-gas atmosphere within the stack compartment. Here, the compartment is operated as a closed housing 202 with a small connection to the environment atmosphere to enable a levelling of the outer and inner pressure of the mechanical housing 202.

As an advantage, a self-protecting fuel cell arrangement is provided.

As a further advantage, no heavy protection equipment is required at the fuel cell which saves weight.

As an advantage, not inert gas needs to be provided as the fluid beforehand.

As an advantage, at take-off operation of the aircraft the atmospheric pressure is around 1 bar and thus provides a sufficient oxygen partial pressure for fuel cell operation of the outer active area of the cell.

As an advantage, auxiliary electric power is provided by the fuel cell.

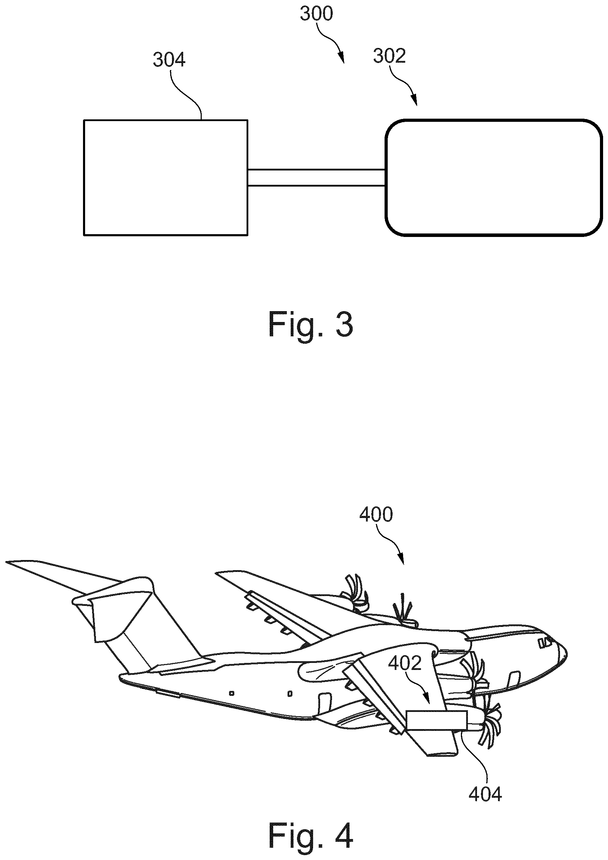

Fig. 3 schematically shows a general scheme of an example of an energy supply system 300. The energy supply system 300 comprises at least one fuel cell arrangement 302 according to one of the previous examples and a fuel reservoir 304. The fuel reservoir 304 is connected to the at least one fuel cell arrangement 302 to supply the second supply flow 26, not shown in Fig. 3. The at least one fuel cell arrangement 302 is configured to provide electric energy to power consuming loads.

In an example, the energy supply system 300 is configured to consider the auxiliary electric power provided by the secondary power coating.

Fig. 4 schematically shows an example of an aircraft 400 comprising at least one energy supply system 402. The aircraft 400 comprises at least one energy supply system 402 according to the previous example and at least one power consuming load 404. The least one power consuming load 404 comprises at least one of the group of: a propulsion system, electric avionic equipment and onboard electric devices for a cabin area. The least one power consuming load 404 is powered by the at least one energy supply system 402.

In an example, the aircraft 400 is on ground and the fuel cell arrangement 302 comprises surrounding atmosphere 216 in the housing 202, not shown in detail in Fig. 4. For taking off the aircraft 400 requires additional electrical power. This power is supplied by the fuel cell arrangement 302 converting the oxidant of the surrounding atmosphere 216 in its housing 202, not shown in detail in Fig. 4. On the flight mission all oxidant is used up in the housing 202 and the fuel cell setup 210 in the fuel cell arrangement 302 is immersed in an inert fluid stemming from the conversion of the oxidant of the surrounding atmosphere 216, not shown in detail in Fig. 4.

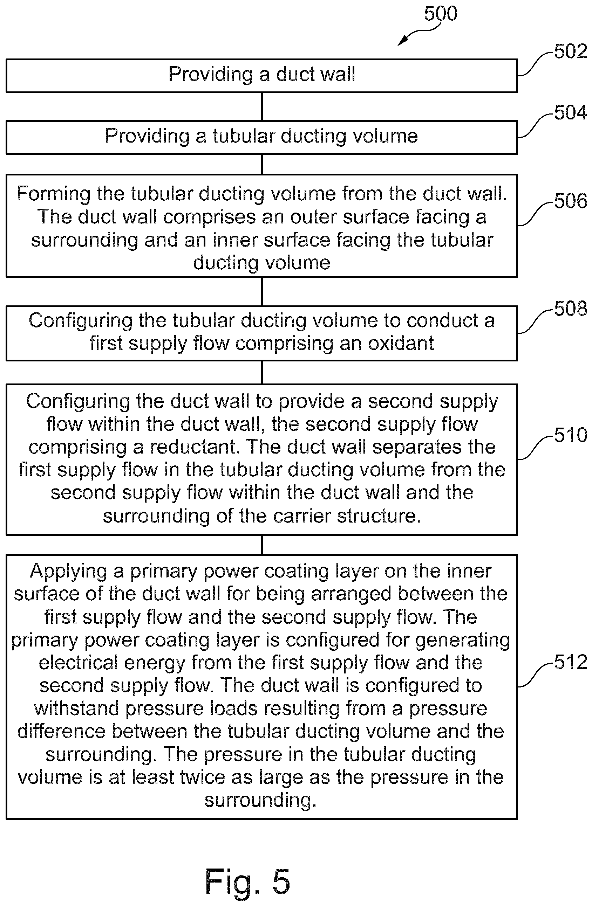

Fig. 5 shows basic steps of an example of a method 500 for providing a carrier structure 10 for electrodes 12 of a fuel cell, with reference to Fig. 1. The method 500 comprises the following steps:
- In a first step 502 a duct wall 14 is provided,
- In a second step 504 a tubular ducting volume 16 is provided, and
- In a third step 506 the tubular ducting volume 16 is formed from the duct wall 14. The duct wall 14 comprises an outer surface 18 facing a surrounding 20 and an inner surface 22 facing the tubular ducting volume 16,
- In a fourth step 508 the tubular ducting volume 16 is configured to conduct a first supply flow 24 comprising an oxidant,
- In a fifth step 510 the duct wall 14 is configured to provide a second supply flow 26 within the duct wall 14, the second supply flow 26 comprising a reductant. The duct wall 14 separates the first supply flow 24 in the tubular ducting volume 16 from the second supply flow 26 within the duct wall 14 and the surrounding 20 of the carrier structure 10 and
- In a sixth step 512 a primary power coating layer 28 is applied on the inner surface 22 of the duct wall 14 for being arranged between the first supply flow 24 and the second supply flow 26. The primary power coating layer 28 is configured for generating electrical energy from the first supply flow 24 and the second supply flow 26. The duct wall 14 is configured to withstand pressure loads 30 resulting from a pressure difference between the tubular ducting volume 16 and the surrounding 20. The pressure in the tubular ducting volume 16 is at least twice as large as the pressure in the surrounding 20.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A carrier structure (10) for electrodes (12) of a fuel cell, the structure comprising:
- a duct wall (14); and
- a tubular ducting volume (16);
wherein the duct wall forms the tubular ducting volume and comprises an outer surface (18) facing a surrounding (20) and an inner surface (22) facing the tubular ducting volume;
wherein the tubular ducting volume is configured to conduct a first supply flow (24) comprising an oxidant;
wherein the duct wall is configured to provide a second supply flow (26) within the duct wall, the second supply flow comprising a reductant;
wherein the duct wall separates the first supply flow in the tubular ducting volume from the second supply flow within the duct wall and the surrounding of the carrier structure;
wherein a primary power coating layer (28) is applied on the inner surface of the duct wall for being arranged between the first supply flow and the second supply flow;
wherein the primary power coating layer is configured for generating electrical energy from the first supply flow and the second supply flow;
wherein the duct wall is configured to withstand pressure loads (30) resulting from a pressure difference between the tubular ducting volume and the surrounding; and
wherein the pressure in the tubular ducting volume is at least twice as large as the pressure in the surrounding.

2. Structure according to claim 1, wherein the pressure difference between the tubular ducting volume and the surrounding results from the pressure of the first supply flow being larger than the pressure of the second supply flow being larger than the pressure in the surrounding.

3. Structure according to claim 1 or 2, wherein the duct wall is based on an open-cellular structure (32);
wherein the open-cellular structure is configured to enhance interconnection within the duct wall to provide for its mechanical stability;
wherein the outer surface and the inner surface of the duct wall are formed from more dense cell regions of the open-cellular structure that are configured to separate the second supply flow from the first supply flow and the surrounding; and
wherein the open-cellular structure comprises less dense cell regions within the duct wall to conduct the second supply flow.

4. Structure according to claim 3, wherein the open-cellular structure comprises a metal foam.

5. Structure according to one of the preceding claims, wherein the duct wall is formed from a first tubular wall (34) and a second tubular wall (36) in a double-walled manner;
wherein the first tubular wall encloses the tubular ducting volume;
wherein the first tubular wall is coaxially surrounded by the second tubular wall providing a flow space between the first tubular wall and the second tubular wall;
wherein the first tubular wall is held spaced apart from the second tubular wall by a plurality of spacers allowing the second supply flow within the flow space; and
wherein at least the first tubular wall allows a flow of the reductant from the flow space towards the inner surface.

6. Structure according to claim 5, wherein the primary power coating layer covers at least a part of the inner surface formed by the first tubular wall.

7. Structure according to one of the preceding claims, wherein a secondary power coating layer (38) is applied on the outer surface of the duct wall for being arranged between the second supply flow and the surrounding providing an auxiliary source of oxidant to react with the reductant of the second supply flow; and
wherein the secondary power coating layer is configured for providing electrical energy from the second supply flow and the auxiliary source of oxidant.

8. A fuel cell setup (100), comprising:
- at least one carrier structure (110) according to one of the preceding claims; and
- electric terminals (112);
wherein the electric terminals comprise inner electric terminals (114a, 114b) that are in electric contact with a primary power coating layer (128); and
wherein the electric terminals are configured to establish an electric power circuit by operating the carrier structure with an oxidant flow and a reductant flow.

9. Fuel cell setup according to claim 8, wherein the carrier structure comprises a secondary power coating layer (138); and
wherein the electric terminals comprise at least one outer electric terminal (140) that is in electric contact with the secondary power coating layer; and
wherein the inner electric terminals are configured to establish a first electric power circuit and the at least one outer electric terminal is configured to establish a second electric power circuit.

10. Fuel cell setup according to claim 8 or 9, wherein the at least one outer electric terminal is further configured for short-circuiting at the secondary power coating layer to form at least one short circuit unit; and
wherein the at least one short circuit unit is configured for a depletion of an auxiliary source of oxidant of a surrounding.

11. A fuel cell arrangement (200), comprising:
- a housing (202); and
- at least one fuel cell setup (210) according to one of the claims 8 to 10;
wherein the least one fuel cell setup is encased by the housing;
wherein a gap (212) between the at least one fuel cell setup and the housing forms a fluid receiving compartment for a fluid (214); and
wherein the fluid prevents a contact of the at least one fuel cell setup with a surrounding atmosphere (216) of the housing.

12. Fuel cell arrangement, according to claim 11, wherein the housing further provides an access (218) of the fluid receiving compartment to the surrounding atmosphere for leveling a pressure of a protective fluid;
wherein the protective fluid comprises the surrounding atmosphere;
wherein the at least one fuel cell setup converts the surrounding atmosphere to the protective fluid when operating; and
wherein the at least one fuel cell setup generates an auxiliary electric power from the surrounding atmosphere in the protective fluid.

13. An energy supply system (300) comprising:
- at least one fuel cell arrangement (302) according to claim 11 or 12; and
- a fuel reservoir (304);
wherein the fuel reservoir is connected to the at least one fuel cell arrangement to supply the second supply flow; and
wherein the at least one fuel cell arrangement is configured to provide electric energy to power consuming loads.

14. An aircraft (400), comprising:
- at least one energy supply system (402) according to claim 13; and
- at least one power consuming load (404);
wherein the least one power consuming load comprises at least one of the group of: a propulsion system, electric avionic equipment and onboard electric devices for a cabin area; and
wherein the least one power consuming load is powered by the at least one energy supply system.

15. A method (500) for providing a carrier structure for electrodes of a fuel cell, comprising the following steps:
- Providing (502) a duct wall;
- Providing (504) a tubular ducting volume; and
- Forming (506) the tubular ducting volume from the duct wall, wherein the duct wall comprises an outer surface facing a surrounding and an inner surface facing the tubular ducting volume;
- Configuring (508) the tubular ducting volume to conduct a first supply flow comprising an oxidant;
- Configuring (510) the duct wall to provide a second supply flow within the duct wall, the second supply flow comprising a reductant;
wherein the duct wall separates the first supply flow in the tubular ducting volume from the second supply flow within the duct wall and the surrounding of the carrier structure; and
- Applying (512) a primary power coating layer on the inner surface of the duct wall for being arranged between the first supply flow and the second supply flow;
wherein the primary power coating layer is configured for generating electrical energy from the first supply flow and the second supply flow;
wherein the duct wall is configured to withstand pressure loads resulting from a pressure difference between the tubular ducting volume and the surrounding; and
wherein the pressure in the tubular ducting volume is at least twice as large as the pressure in the surrounding.
